# EUROPEAN PATENT APPLICATION

(11) **EP 4 645 192 A1**
(43) Date of publication of application: **05.11.2025**
(21) Application number: 23910190.0
(22) Date of filing: 14.12.2023
(51) Int. Cl.: G06Q 20/06, G06Q 20/22, G06Q 20/38

(54) **DIGITAL CURRENCY CROSS-BORDER TRANSACTION METHOD AND APPARATUS BASED ON BLOCKCHAIN, AND STORAGE MEDIUM**

(30) Priority: 30.12.2022 CN 202211720692
(71) Applicant: Digital Currency Institute, The People's Bank of China, Beijing 100071 (CN)
(72) Inventor: MU, Changchun, Beijing 100071 (CN); DI, Gang, Beijing 100071 (CN); LYU, Yuan, Beijing 100071 (CN); QIAN, Youcai, Beijing 100071 (CN); ZHANG, Mingming, Beijing 100071 (CN); CHEN, Qingjie, Beijing 100071 (CN)
(74) Representative: Epping - Hermann - Fischer
(86) International application number: PCT/CN2023/138886
(87) International publication number: WO 2024/140260

(57) **Abstract**

A digital currency cross-border transaction method and apparatus based on a blockchain, and a storage medium, which relate to the technical field of payment transactions. The digital currency cross-border transaction method based on a blockchain is applied to a transaction initiation device in a blockchain payment system. The method comprises: generating a digital currency payment request; creating a payment request block according to the digital currency payment request, and sending the payment request block to a blockchain, wherein the payment request block is obtained according to a private key signature of a transaction initiation device, the blockchain is configured with a digital currency smart contract that comprises a payment function, and the payment function is configured to perform payment processing according to the payment request block; and in response to a payment success result of the payment function for the payment request block, determining that the digital currency payment request is completed. The method is configured to solve the problem in the related art of the payment efficiency being low due to payment processes being cumbersome.

## Description

The present application claims the priority to Chinese Patent Application No. 202211720692.8, filed on December 30, 2022, which is incorporated herein by reference in its entirety.

### FIELD

The present disclosure relates to the technical field of payment transactions, and in particular to a digital-currency cross-border transaction method and apparatus based on a blockchain, and a storage medium.

### BACKGROUND

Currently, during a cross-border transaction, a payment and a settlement of cross-border funds between a payment bank and a beneficiary bank are realized by multiple correspondent banks.

### SUMMARY

In an aspect, a digital-currency cross-border transaction method based on a blockchain is provided. The method is applied to a transaction initiation device in a blockchain payment system. The method includes: generating a digital-currency payment request which includes a payment account address, a beneficiary account address of a beneficiary bank, a payment amount, and currency-type information; creating a payment request block based on the digital-currency payment request and sending the payment request block to the blockchain, where the payment request block is obtained by signing based on a private key of the transaction initiation device, the blockchain is configured with a digital-currency smart contract including a payment function, the payment function is used for performing payment based on the payment request block, and the digital-currency smart contract is used for managing digital currency corresponding to the currency-type information; and determining, in response to a success result of the payment by the payment function for the payment request block, that the digital-currency payment request is completed.

In some embodiments, the digital-currency cross-border transaction method further includes: generating a digital-currency exchange request; where the digital-currency exchange request includes an exchange account address, an exchange amount, and exchange currency-type information; creating an exchange request block based on the digital-currency exchange request and sending the exchange request block to the blockchain, for requesting to invoke at least one exchange smart contract configured in the blockchain by the digital-currency smart contract, where the exchange request block is obtained by signing based on the private key of the transaction initiation device, and each exchange smart contract is used for exchanging a local currency for a foreign currency; and determining, in response to a success result of exchanging by the exchange smart contract for the exchange request block, that the digital-currency exchange request is completed.

In some embodiments, the blockchain payment system further includes a transaction supervision device. Before the creating an payment request block based on the digital-currency payment request, the digital-currency cross-border transaction method further includes: receiving an instruction message sent by the transaction supervision device; where the instruction message is used to instruct the transaction initiation device to create the payment request block based on the digital-currency payment request; and the instruction message is generated in a case that a compliance audit is passed, the compliance audit being performed by the transaction supervision device on the digital-currency payment request based on a predetermined compliance rule upon monitoring the digital-currency payment request.

In some embodiments, before the creating a payment request block based on the digital-currency payment request, the digital-currency cross-border transaction method further includes: performing authentication on the digital-currency payment request based on a predetermined authentication rule; and creating the payment request block based on the digital-currency payment request in a case that the authentication is passed.

In some embodiments, the payment smart contract and the at least one exchange smart contract are created by the transaction supervision device.

In some embodiments, before the creating a payment request block based on the digital-currency payment request, the digital-currency cross-border transaction method further includes: sending an institution join request to the transaction supervision device, where the institution join request includes the payment account address and an institution identifier; and joining, in response to a join completion message, the blockchain payment system.

In some embodiments, the digital-currency cross-border transaction method further includes: generating a digital-currency issuance request, where the digital-currency issuance request includes an issuance amount and an issuance account address; creating an issuance request block based on the digital-currency issuance request and sending the issuance request block to the blockchain, for requesting to invoke an issuance smart contract configured in the blockchain by the digital-currency smart contract; where the issuance request block is obtained by signing based on the private key of the transaction initiation device, and the issuance smart contract is used for exchanging a local currency for a local digital currency; and determining, in response to a success result of issuance by the issuance smart contract for the issuance request block, that the digital-currency issuance request is completed.

In some embodiments, the digital-currency cross-border transaction method further includes: generating a digital-currency cancellation request; where the digital-currency issuance request includes a cancellation amount and a cancellation account address; creating a cancellation request block based on the digital-currency cancellation request and sending the cancellation request block to the blockchain, for requesting to invoke a cancellation smart contract configured in the blockchain by the digital-currency smart contract; where the cancellation request block is obtained by signing based on the private key of the transaction initiation device, and the cancellation smart contract is used for exchanging a local digital currency for a local currency; and determining, in response to a success result of cancellation by the cancellation smart contract for the issuance request block, that the digital-currency cancellation request is completed.

In some embodiments, the digital-currency cross-border transaction method further includes: generating a digital-currency transaction inquiry request; where the digital-currency payment request includes the payment account address and a transaction time period; sending the digital-currency transaction inquiry request to the blockchain; where the blockchain is configured with a transaction-record inquiry contract, and the transaction-record inquiry contract is used for inquiring a transaction record based on the digital-currency transaction inquiry request; and acquiring a transaction-record inquiry result sent by the blockchain, to obtain a transaction record during the transaction time period.

In some embodiments, for the digital-currency cross-border transaction method, the digital-currency smart contract configured in the blockchain includes a limit function, and the limit function is used for performing a limit verification on the payment amount based on the payment request block.

In some embodiments, for the digital-currency cross-border transaction method, the blockchain is configured with an institution status audition function, and the institution status audition function is used to detect whether a payment account address is frozen.

In some embodiments, for the digital-currency cross-border transaction method, a consensus algorithm configured in the blockchain is a HotStuff-like consensus algorithm.

In another aspect, a digital-currency cross-border transaction apparatus based on a blockchain is provided. The apparatus is applied to a transaction initiation device in a blockchain payment system, and the apparatus includes: a generating unit, a processing unit, a sending unit, and a determining unit. The generating unit is configured to generate a digital-currency payment request which includes a payment account address, a beneficiary account address of a beneficiary bank, a payment amount, and currency-type informationn. The processing unit is configured to create a payment request block based on the digital-currency payment request, where the payment request block is obtained by signing based on a private key of the transaction initiation device, the blockchain is configured with a digital-currency smart contract including a payment function, the payment function is used for performing payment based on the payment request block, and the digital-currency smart contract is used for managing digital-currency corresponding to the currency-type information. The sending unit is configured to send the payment request block to the blockchain. The determining unit is configured to determine, in response to a success result of the payment by the payment function for the payment request block, that the digital-currency payment request is completed.

In another aspect, a transaction initiation device is provided. The transaction initiation device includes a processor and a communication interface; where the communication interface is coupled to the processor to cause the processor to execute a computer program or an instruction, to perform the digital-currency cross-border transaction method based on a blockchain according to the first aspect.

In another aspect, a computer-readable storage medium is provided. A computer-executable instruction stored in the computer-readable storage medium, when executed by a processor of an electronic device, causes the electronic device to perform the digital-currency cross-border transaction method based on a blockchain according to the first aspect.

In another aspect, a computer program product storing computer instructions is provided. The computer instructions, when executed on an electronic device, cause the electronic device to perform the digital-currency cross-border transaction method based on a blockchain according to the first aspect.

### BRIEF DESCRIPTION OF THE DRAWINGS

The drawings herein that are incorporated into the description and constitute a part of the description, show embodiments consistent with the present disclosure for describing the principle of the present disclosure together with the description, rather than constitute an improper limitation to the present disclosure.
FIG. 1 is a structural diagram of a payment system according to a general technology;
FIG. 2 is a structural diagram of a payment system according to one or more embodiments;
FIG. 3 is a structural diagram of a transaction initiation device according to one or more embodiments;
FIG. 4 is a structural diagram of a payment transaction node according to one or more embodiments;
FIG. 5 is a structural diagram of a CBDC module according to one or more embodiments;
FIG. 6 is a first flowchart of a digital-currency cross-border transaction method based on a blockchain according to one or more embodiments;
FIG. 7 is a second flowchart of a digital-currency cross-border transaction method based on a blockchain according to one or more embodiments;
FIG. 8 is a third flowchart of a digital-currency cross-border transaction method based on a blockchain according to one or more embodiments;
FIG. 9 is a fourth flowchart of a digital-currency cross-border transaction method based on a blockchain according to one or more embodiments;
FIG. 10 is a structural diagram of a digital-currency cross-border transaction apparatus based on a blockchain according to one or more embodiments; and
FIG. 11 is a structural diagram of a transaction initiation device according to one or more embodiments.

### DETAILED DESCRIPTION

In order to better understand the technical solutions of the present disclosure for those skilled in the art, combined with the drawings, the technical solutions in the embodiments of the present disclosure are clearly and thoroughly illustrated hereinafter.

It should be noted that the terms such as "first", "second" and the like in the description, the claims and the drawings of the present disclosure are to distinguish similar objects, rather than describe a particular or chronological order. It should be understood that the terms used herein may be exchanged as appropriate, such that the embodiments of the present disclosure described herein may be implemented in an order other than the order shown or described herein. The implementations described in the following exemplary embodiments do not represent all implementations that are consistent with the present disclosure. On the contrary, the implementations are merely examples of devices and methods that are described in detail in the appended claims and that are consistent with some aspects of the present disclosure.

Before the cross-border transaction method provided according to some embodiments of the present disclosure is described in detail, the relevant elements, application scenarios, and implementation environments involved in some embodiments of the present disclosure are briefly described firstly.

First, the relevant elements involved in some embodiments of the present disclosure are briefly described.

Hyper Text Transfer Protocol over Securesocket (HTTPS) layer is a Hyper Text Transfer Protocol (HTTP) channel aiming at security, and it ensures security of the transmission process by performing encryption during transmission and identity authentication on the basis of HTTP.

Digital currency refers to a currency in a digital form, such as digital Chinese Yuan and the like.

A consensus node refers to a node that participates in consensus voting, transaction execution, block verification, and ledger maintenance in a blockchain network.

A synchronization node, also known as a witness node, participates in block synchronization and transaction synchronization, block verification, and transaction execution, records complete ledger data, but does not participate in the consensus voting.

A smart contract refers to a computer protocol intended to propagate, verify, or execute contracts in an information-based manner.

A peer-to-Peer (P2P) network is an internet system without a central server and relying on peers to exchange information, which can reduce the number of nodes compared with a conventional network transmission, thereby reducing the risk of data loss.

In addition, application scenarios involved in some embodiments of the present disclosure are briefly described.

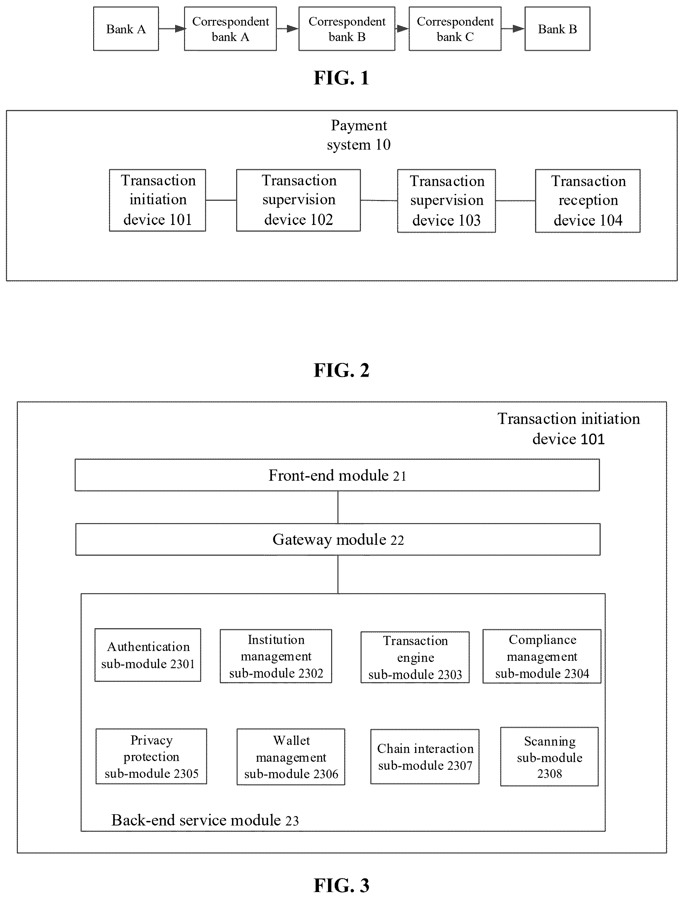

FIG. 1 shows a general case. Currently, during a cross-border transaction, a payment and a settlement of cross-border funds between a payment bank and a beneficiary bank are realized by multiple correspondent banks. Since multiple correspondent banks are required in the above cross-border transaction, the payment process is complex, leading to a low payment efficiency. Therefore, how to simplify the cross-border payment process and improve the payment efficiency is a problem to be urgently solved.

In addition, the time consumption of cross-border payment will be increased due to the possible time difference between the remittance bank, the beneficiary bank, and the correspondent banks or the correspondent banks being on a holiday. Customers have to pay fees to the correspondent banks for a remittance, leading to a high cost. Statements are written off once a day at the end of a day based on a correspondent mode, which leads to a low efficiency. The remittance bank fails to be informed of a payment status and a payment chain in time, leading to low transparency of the payment process.

In view of the above problems, a digital-currency cross-border transaction method based on a blockchain is provided according to some embodiments of the present disclosure. The method is applied to a transaction initiation device in a blockchain payment system. The method includes: generating a digital-currency payment request which includes a payment account address, a beneficiary account address of a beneficiary bank, a payment amount, and currency-type information; creating a payment request block based on the digital-currency payment request and sending the payment request block to the blockchain, where the payment request block is obtained by signing based on a private key of the transaction initiation device, the blockchain is configured with a digital-currency smart contract including a payment function, the payment function is used for performing payment based on the payment request block, and the digital-currency smart contract is used for managing digital currency corresponding to the currency-type information; and determining, in response to a success result of the payment by the payment function for the payment request block, that the digital-currency payment request is completed.

In this way, the payment of currency between the payment bank and the beneficiary bank is completed on the blockchain via the payment smart contract. The cross-border payment between the paying bank and the receiving bank is completed through a peer to peer manner without correspondent banks, which may omit the complex payment process via the correspondent banks, and thus may simplify the cross-border payment process, thus improving the payment efficiency. Moreover, the different central banks or monetary authorities may manage digital-currency assets in respective countries or regions by creating and managing their respective digital-currency smart contracts. In addition, the transfer of funds between banks may be completed in a real time manner with the blockchain, and the payment process is transparent and open.

Finally, an implementation environment (implementation architecture) involved in the methods provided according to some embodiments of the present disclosure is briefly described.

FIG. 2 is a diagram showing an implementation architecture according to some embodiments of the present disclosure, showing a structural diagram of a payment system 10 according to one or more embodiments. The payment system 10 includes: a transaction initiation device 101, multiple transaction supervision devices (FIG. 2 exemplarily shows a transaction supervision device 102 and a transaction supervision device 103, and in practical, there may be more consensus nodes), and a transaction reception device 104. The transaction initiation device 101 is connected to the transaction reception device 104 via the transaction supervision devices.

For example, as shown in FIG. 2, the transaction initiation device 101 is connected to the transaction supervision device 102; the transaction supervision device 102 is connected to the transaction supervision device 103; and the transaction supervision device 103 is connected to the transaction reception device 104.

In some embodiments, the transaction supervision devices are consensus nodes.

In some embodiments, the transaction supervision device 102 is connected to the transaction supervision device 103 via a P2P network. In this way, the transaction supervision device 102 is directly connected to the transaction supervision device 103, the transaction initiation device 101 is indirectly connected to the transaction reception device 104, and the transaction initiation device 101 communicates with the transaction reception device 104 via the P2P network.

It should be noted that the transaction supervision devices are devices of a supervision bank (e.g., devices of a central bank). The transaction initiation device is a commercial bank. The transaction supervision devices correspond to at least one transaction initiation device. The transaction supervision devices supervise each transaction from the transaction initiation device.

Each of the transaction initiation device 101, the transaction supervision device 102, the transaction supervision device 103, and the transaction reception device 104 includes a front-end module 21, a gateway module 22, and a back-end service module 23. The front-end module 21 includes a display interface. The back-end service module 23 includes an authentication sub-module 2301, an institution management sub-module 2302, a transaction engine sub-module 2303, a compliance management sub-module 2304, a privacy protection sub-module 2305, a wallet management sub-module 2306, a chain interaction sub-module 2307, and a scanning sub-module 2308. (FIG. 3 exemplarily shows a structure of the transaction initiation device 101.)

The gateway module 22 is configured to perform rate limiting and load balancing on data sent by the front-end module.

The authentication sub-module 2301 is configured to authenticate the data sent by the front-end module.

The institution management sub-module 2302 is configured to store an institution identifier with a transaction authority.

The transaction engine sub-module 2303 is configured to provide functions such as capital injection, capital withdrawal, payment, and foreign exchange.

The compliance management sub-module 2304 is configured to provide functions such as compliance rule management and rule validation.

In some embodiments, the compliance management sub-module 2304 stores a compliance rule. For example, the compliance rule includes transaction limit, and the number of transactions for each account address.

The privacy protection sub-module 2305 is configured to provide functions such as supporting transaction privacy protection, payment account address reporting, and transaction reporting.

The wallet management sub-module 2306 is configured to provide functions such as signing, encryption and decryption based on a key.

The chain interaction sub-module 2307 is configured to encapsulate transaction data such that the transaction data is sent to the blockchain via a request interface.

The scanning sub-module 2308 is configured to acquire and parse transactions and events on the blockchain.

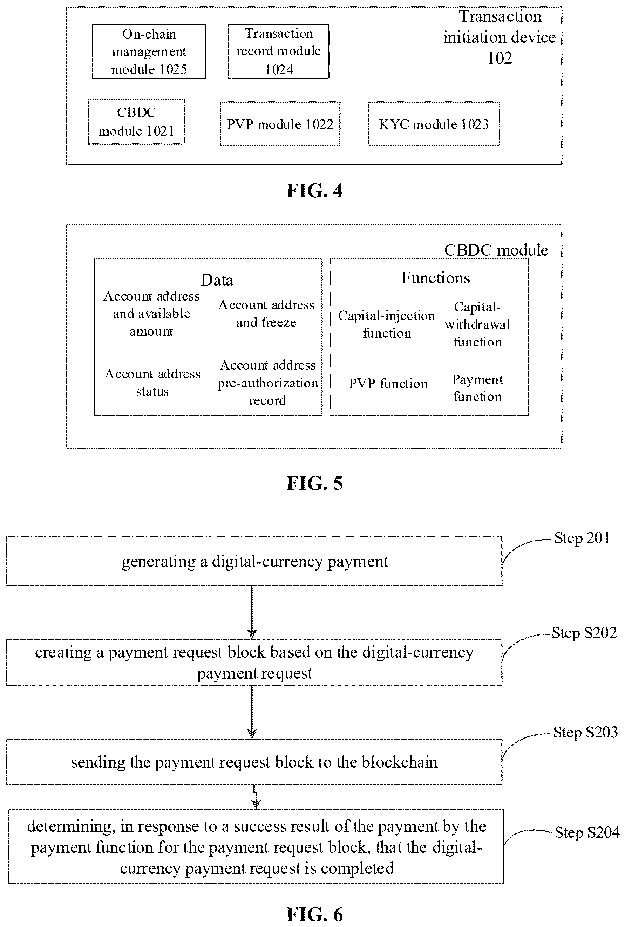

Each of the transaction supervision device 102 and the transaction supervision device 103 includes a central bank digital currencies (CBDC) smart contract module 1021, a payment versus payment (PVP) smart contract module 1022, a know your customer (KYC) smart contract module 1023, a transaction record module 1024, and an on-chain management module 1025. (FIG. 4 exemplarily shows a structure of the transaction supervision device 102.)

A CBDC module is configured to store CBDC assets, a capital-injection function, a capital-withdrawal function, a PVP function, and a payment function. For example, FIG. 5 shows a CBDC module. The CBDC module stores data and functions. The data includes an account address and available amount, an account address and freeze status, an account-address status, and an account-address pre-authorization record. The functions include a capital-injection function, a capital-withdrawal function, a PVP function, an exchange function, and a payment function.

The PVP module is configured to implement all-day payment versus payment settlement of cross-border transactions of currency pairs, where the PVP smart contract is triggered by the CBDC module.

The transaction record module is configured to record a CBDC payment, a capital injection, a capital withdrawal, and a PVP transaction.

The on-chain management module is configured to initiate a proposal to consensus nodes in the blockchain, for adding a consensus node or removing a consensus node, or increasing a function of the blockchain.

For ease of understanding, a digital-currency cross-border transaction method based on a blockchain provided according to some embodiments of the present disclosure is described below in combination with the drawings.

FIG. 6 is a first flowchart of a digital-currency cross-border transaction method based on a blockchain according to one or more embodiments. The digital-currency cross-border transaction method based on a blockchain according to some embodiments of the present disclosure is applied to a transaction initiation device in a blockchain payment system. As shown in FIG. 6, the digital-currency cross-border transaction method based on a blockchain includes step 201 to step 204.

In step 201, a transaction initiation device generates a digital-currency payment request.

The digital-currency payment request includes a payment account address, a beneficiary account address of a beneficiary bank, a payment amount, and currency-type information.

In some embodiments, the transaction initiation device generates, in response to a payment operation of a user, the digital-currency payment request.

For example, the following is taken as an example. A payment is made from bank A to bank B with a payment account address of 521112, a beneficiary account address of 621112, a payment amount of 5000, and currency-type information of ¥. The user enters 621112, 5000 and selects the currency information ¥ on the display interface of the front-end module. Further, the payment operation is performed by clicking the "Confirm Payment" control. For the transaction initiation device, the digital-currency payment request is generated based on 521112, 621112, 5000, and ¥ in a case that the "confirm payment" control being clicked is detected.

In some embodiments, the digital-currency payment request may further include a payment bank identifier, a payment bank name, a payment time, a beneficiary bank name, and a beneficiary bank identifier.

In step 202, the transaction initiation device creates a payment request block based on the digital-currency payment request.

The payment request block is obtained by signing based on a private key of the transaction initiation device.

In step 203, the transaction initiation device sends the payment request block to a blockchain.

The blockchain is configured with a digital-currency smart contract including a payment function, and the payment function is used for performing payment based on the payment request block.

In step 204, the transaction initiation device determines, in response to a success result of the payment by the payment function for the payment request block, that the digital-currency payment request is completed.

In some embodiments, after the transaction initiation device sends the payment request block to the blockchain, a target transaction supervision device corresponding to the transaction initiation device invokes the payment function after receiving the payment request block. Further, the target transaction supervision device pays a certain amount of digital currency from the digital-currency wallet corresponding to the transaction initiation device to a second digital-currency wallet by invoking the payment function. The second digital-currency wallet is a digital-currency wallet configured by a receiving transaction-supervision device for a transaction reception device. The receiving transaction-supervision device supervises the transaction reception device.

For example, in conjunction with FIG. 2, the transaction initiation device 101 sends the payment request block to the blockchain. Accordingly, the transaction supervision device 102 invokes the payment function after receiving the payment request block. The transaction supervision device 102 pays 1000$ from a first digital-currency wallet configured for the transaction initiation device 101 to a second digital-currency wallet in the transaction supervision device 103 by invoking the payment function. The second digital-currency wallet is a digital-currency wallet configured by the transaction supervision device 103 for the transaction reception device 104.

Subsequently, the transaction supervision device 102 generates a payment success result and sends the payment success result to the transaction initiation device 101.

Accordingly, the transaction initiation device determines, in response to the success result of the payment by a payment smart contract for the payment request block, that the digital-currency payment request is completed, and displays a payment success message to the user.

In some embodiments, after the transaction initiation device sends the payment request block to the blockchain, multiple transaction supervision devices parse, after receiving the payment request block sent by the transaction initiation device, the payment request block based on the public key to obtain the content of the payment request block. Further, each transaction supervision device performs voting based on the content of the payment request block and a predetermined consensus mechanism to obtain a voting result. Subsequently, each transaction supervision device sends a voting result to the target transaction supervision device corresponding to the transaction initiation device.

The target transaction supervision device determines, by obtaining the number of transaction supervision devices supporting the payment request through counting in the voting result, whether the voting for the payment request indicates an approval based on the number of transaction supervision devices supporting the payment request and a total number of the transaction supervision devices. Subsequently, the payment function is triggered in a case that the payment request is approved by the voting, to debit the payment amount from a first digital-currency wallet and transfer the payment amount to a second digital-currency wallet.

It should be noted that the predetermined consensus mechanism is pre-configured by operation and maintenance personnel. The predetermined consensus mechanism may be a hotstuff-like consensus algorithm, or a practical byzantine fault tolerance (PBFT)-like consensus algorithm, or other consensus algorithms, which is not limited in the present disclosure.

It can be understood that the transaction supervision device is configured with a digital-currency wallet for each transaction initiation device under supervision thereof.

A digital-currency cross-border transaction method based on a blockchain provided according to some embodiments of the present disclosure has the following beneficial effects. The payment of currency between the payment bank and the beneficiary bank is completed on the blockchain via the payment smart contract, thus the cross-border payment between the payment bank and the beneficiary bank is completed through a peer to peer manner rather than correspondent banks, omitting the complex payment process via the correspondent banks, and simplifying the cross-border payment process, thus improving the payment efficiency. Moreover, the different central banks or monetary authorities may manage digital-currency assets in respective countries or regions by creating and managing their respective digital-currency smart contracts. In addition, the transfer of funds between banks may be completed in a real time manner with the blockchain, and the payment process is transparent and open.

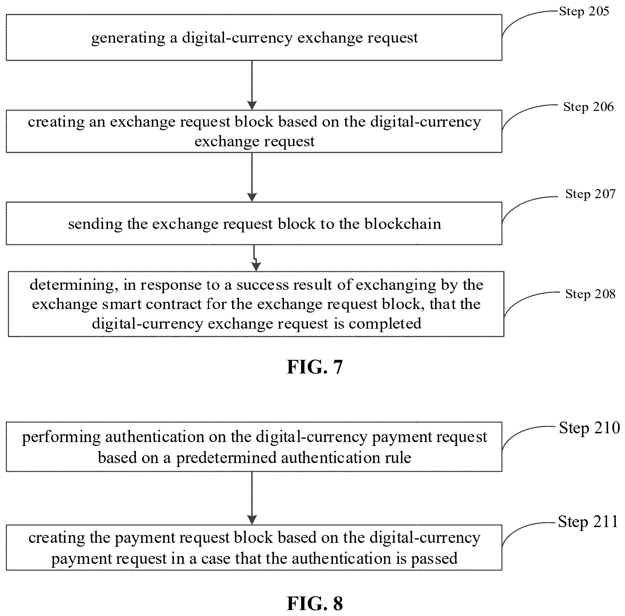

In some embodiments, different currencies are exchanged for better cross-border transactions. As shown in FIG. 7, a digital-currency cross-border transaction method based on a blockchain according to some embodiments of the present disclosure includes step 205 to step 208.

In step 205, a transaction initiation device generates a digital-currency exchange request.

The digital-currency exchange request includes an exchange account address, an exchange amount, and exchange currency-type information.

In a possible implementation, the transaction initiation device acquires exchange currency-type information and the exchange amount before generating an exchange request block, and generates the digital-currency exchange request based on the exchange currency-type information and the exchange amount.

In some embodiments, the transaction initiation device generates the digital-currency exchange request after joining the blockchain.

For example, the transaction initiation device determines to obtain 2000 foreign currency from local currency by exchanging after receiving an exchange instruction. Further, the transaction initiation device generates the digital-currency exchange request based on the exchange instruction.

In step 206, the transaction initiation device creates an exchange request block based on the digital-currency exchange request.

The exchange request block is obtained by signing based on the private key of the transaction initiation device.

In step 207, the transaction initiation device sends the exchange request block to the blockchain.

At least one currency-exchange smart contract configured in the blockchain is invoked by the digital-currency smart contract, and the currency-exchange smart contract is used to exchange a local currency for a foreign currency.

It can be understood that the exchange request block is configured to request the target transaction supervision device to invoke the at least one exchange smart contract configured in the blockchain by the digital-currency smart contract, thereby completing the exchange request.

In step 208, the transaction initiation device determines, in response to a success result of exchanging by the exchange smart contract for the exchange request block, that the digital-currency exchange request is completed.

In some embodiments, after the transaction initiation device sends the exchange request block to the blockchain, the target transaction supervision device corresponding to the transaction initiation device invokes an exchange smart contract after receiving the exchange request block. Further, the target transaction supervision device deducts a first amount of local currency from a digital-currency wallet corresponding to the transaction initiation device and generates a second amount of foreign currency by means of the exchange smart contract.

It should be noted that the transaction initiation device provided according to some embodiments of the present disclosure acquires an exchange rate in a real time manner or periodically, and updates the exchange smart contract based on the exchange rate.

It can be understood that the digital-currency cross-border transaction method based on a blockchain provided according to some embodiments of the present disclosure may utilize the exchange smart contract to express currencies from many countries, such that different currencies may be utilized in the cross-border transaction.

In some embodiments, in order to ensure the transaction, the blockchain payment system further includes transaction supervision devices. A digital-currency cross-border transaction method based on a blockchain according to some embodiments of the present disclosure further includes step 209 before creating a payment request block based on a digital-currency payment request.

In step 209, the transaction initiation device receives an instruction message sent by the transaction supervision device.

The instruction message instructs the transaction initiation device to create the payment request block based on the digital-currency payment request. The instruction message is generated in a case that a compliance audit is passed, where the compliance audit is performed by the transaction supervision device on the digital-currency payment request based on a predetermined compliance rule upon monitoring the digital-currency payment request.

In a possible implementation, the target transaction supervision device corresponding to the transaction initiation device performs a compliance audit on the digital-currency payment request based on the predetermined compliance rule upon monitoring the digital-currency payment request initiated by the transaction initiation device, and generates the instruction message in a case that the compliance audit is passed. Further, the target transaction supervision device sends the instruction message to the transaction initiation device.

Accordingly, the transaction initiation device receives the instruction message sent by the transaction supervision device and creates the payment request block based on the digital-currency payment request.

In other embodiments, a transaction initiation device, after generating the digital-currency payment request, sends the digital-currency payment request to the target transaction supervision device corresponding to the transaction initiation device.

Accordingly, the target transaction supervision device performs the compliance audit on the digital-currency payment request based on the predetermined compliance rule after receiving the digital-currency payment request, and generates the instruction message in a case that the compliance audit is passed. Further, the target transaction supervision device sends the instruction message to the transaction initiation device.

It can be understood that the transaction supervision device corresponding to the transaction initiation device is required to perform the compliance audit during each payment of digital currency initiated by the transaction initiation device, and the transaction supervision device instructs, in a case that the compliance audit is passed, the transaction initiation device to proceed with the cross-border transaction. In this way, the transaction may be ensured.

In some embodiments, in order to ensure the transaction, before creating the payment request block, as shown in FIG. 8, the digital-currency cross-border transaction method based on a blockchain according to some embodiments of the present disclosure further includes step 210 to step 211.

In step 210, the transaction initiation device performs authentication on the digital-currency payment request based on a predetermined authentication rule.

In a possible implementation, the transaction initiation device performs authentication the digital-currency payment request based on the predetermined authentication rule after receiving the instruction message sent by the target transaction supervision device.

It should be noted that the predetermined authentication rule is pre-configured by the operation and maintenance personnel in the transaction initiation device.

In some embodiments, the predetermined authentication rule is used to authenticate the payment account address, the beneficiary account address of the beneficiary bank, the payment amount and the currency-type information, and can also be used to authenticate other parameters in the digital-currency payment request. The predetermined authentication rule is not limited in the disclosure.

In step 211, the transaction initiation device creates the payment request block based on the digital-currency payment request in a case that the authentication is passed.

In another embodiment, the transaction initiation device, after generating the digital-currency payment request, performs authentication on the digital-currency payment request based on the predetermined authentication rule, and sends the digital-currency payment request to the target transaction supervision device in a case that the authentication is passed. Subsequently, the transaction initiation device creates the payment request block based on the digital-currency payment request after receiving the instruction message sent by the target transaction supervision device.

It can be understood that the transaction initiation device perform internal authentication on the digital-currency payment request and proceeds with the cross-border transaction in a case that the authentication is passed. In this way, the transaction may be ensured.

In some embodiments, in order to ensure the transaction, in the digital-currency cross-border transaction method based on a blockchain according to embodiments of the present disclosure, a payment smart contract and at least one exchange smart contract are created by the transaction supervision device.

In a possible implementation, after a transaction initiation device joining the blockchain, the target transaction supervision device configures multiple smart contracts (such as, at least one payment smart contract, the at least one exchange smart contract, a capital-injection smart contract, a capital-withdrawal smart contract) for the transaction initiation device.

It can be understood that the transaction supervision device is configured to configure different smart contracts for the transaction initiation device to ensure that the transaction initiation device may perform various transactions under the supervision of the transaction supervision device, which may ensure the transaction.

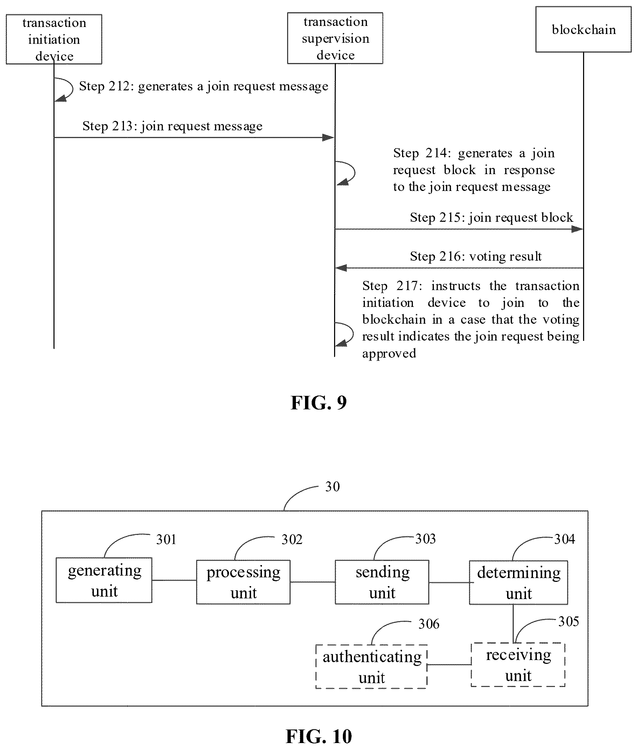

In some embodiments, in order to enable the transaction initiation device to join the blockchain payment system, as shown in FIG. 9, a digital-currency cross-border transaction method based on a blockchain according to some embodiments of the present disclosure further includes step 212 to step 217.

In step 212, the transaction initiation device generates a join request message.

The join request message includes a payment bank identifier and a payment transaction node address.

For example, the payment bank identifier is 0125 and the payment transaction node address is 196.168.0.0. The transaction initiation device generates, in response to a confirmation for joining the blockchain payment system by an operator, the join request message, including 0125 and 196.168.0.0.

In some embodiments, the join request message may further include capital-injection amount.

In step 213, the transaction initiation device sends the join request message to the target transaction supervision device.

In step 214, the target transaction supervision device generates a join request block in response to the join request message.

In a possible implementation, the target transaction supervision device parses the join request message after receiving the join request message, to obtain the payment bank identifier. Further, the target transaction supervision device verifies, based on the payment bank identifier, whether the payment bank has a permission for cross-border payments, and sends the payment bank identifier to an institution management sub-module in the target transaction supervision device in a case that the verification is passed. Accordingly, the institution management sub-module in the target transaction supervision device stores the payment bank identifier.

Subsequently, the target transaction supervision device generates the join request block in response to the join request message.

It can be understood that the transaction initiation device, as part of the payment bank, sends a request to join the blockchain payment system to a central bank in the jurisdiction where the payment bank is located in a case that the payment bank requires to perform a cross-border payment. In addition, the transaction initiation device may join the blockchain for cross-border payment business in a case that the request is approved by the central bank.

In step 215, the target transaction supervision device sends the join request block to the blockchain.

In step 216, the target transaction supervision device acquires a voting result.

In step 217, the target transaction supervision device instructs the transaction initiation device to join to the blockchain in a case that the voting result indicates the join request being approved.

In some embodiments, the target transaction supervision device sends the join request block to the blockchain, and each of the transaction supervision devices in the blockchain performs voting on the join request message based on a predetermined consensus mechanism, and sends a voting result to the target transaction supervision device.

Subsequently, the target transaction supervision device acquires multiple voting results and determines whether the join request is approved based on the multiple voting results. The transaction initiation device joins to the blockchain in a case that the voting results for the join request message indicate that the join request is approved.

In a possible implementation, the target transaction supervision device instructs the transaction initiation device to join to the blockchain payment system and generates a payment account address based on the payment bank identifier in a case that the voting results for the join request message indicate that the join request is approved. Subsequently, the target transaction supervision device adds the payment account address in the CBDC module and sends the payment account address to the transaction initiation device.

Subsequently, each node in the blockchain stores the payment bank identifier in the KYC module.

In another embodiment, when the transaction initiation device leaves the blockchain, the transaction initiation device sends a leaving request message to the target transaction supervision device. Accordingly, the target transaction supervision device receives the leaving request message sent by the transaction initiation device and sends a leaving notification to the blockchain to notify that the transaction initiation device has left the blockchain.

The target transaction supervision device also deletes data corresponding to the payment account address in the CBDC module in response to the leaving request message.

In some embodiments, the target transaction supervision device acquires the data corresponding to the payment account address in the CBDC module and determines whether the data corresponding to the payment account address indicates the existence of funds. The data corresponding to the payment account address in the CBDC module is deleted in a case that the data corresponding to the payment account address indicates that no funds exist.

In some embodiments, in order to reduce the communication complexity of the blockchain, the predetermined consensus mechanism is a hotstuff consensus algorithm.

In some embodiments, each of first transaction supervision devices sends a voting result to a second transaction supervision device. The first transaction supervision devices are transaction supervision devices other than the second transaction supervision device in the blockchain. The second transaction supervision device is a leader node.

Accordingly, the second transaction supervision device broadcasts the multiple voting results after receiving the multiple voting results.

It can be understood that in the hotstuff consensus algorithm, the first transaction supervision devices first send the voting results to the second transaction supervision device in a unicast manner. Accordingly, the second transaction supervision device sends the multiple voting results from respective first transaction supervision devices to the nodes in the blockchain via broadcast after receiving multiple voting results of the first transaction supervision devices. In this way, it can avoid the first transaction supervision devices sending the voting results via broadcast, thereby significantly reducing the communication complexity of the blockchain.

In some embodiments, in order to withdraw capital from a node, a digital-currency cross-border transaction method based on a blockchain according to some embodiments of the present disclosure further includes step 218 to step 219.

In step 218, the target transaction supervision device receives a capital-withdrawal request sent by the transaction initiation device.

The capital-withdrawal request includes capital withdrawal amount and currency-type information.

In step 219, the target transaction supervision device withdraws the capital withdrawal amount from a payment account address based on the capital-withdrawal request and a predetermined capital-withdrawal function.

It should be noted that the predetermined capital-withdrawal function is pre-configured by the operation and maintenance personnel in a payment transaction node.

It can be understood that when the transaction initiation device initiates capital withdrawal and sends a corresponding request to the target transaction supervision device, the target transaction supervision device performs the withdrawal on the amount at the payment account address in the transaction initiation device by invoking the capital-withdrawal function. In this way. The capital-withdrawal function may be utilized to complete a capital-withdrawal operation in a cross-border payment.

In another embodiment, in order to realize foreign exchange by a beneficiary bank, the target transaction supervision device receives an exchange request sent by the transaction initiation device. The payment transaction node withdraws the capital withdrawal amount from the payment account address based on the exchange request and the predetermined PVP function.

It should be noted that the predetermined PVP function is pre-configured by the operation and maintenance personnel in the payment transaction node.

The above mainly describes the solutions provided according to some embodiments of the present disclosure from the perspective of a method. In order to achieve the above functions, a digital-currency cross-border transaction apparatus based on a blockchain or an electronic device includes hardware architectures and/or software modules to implement the respective functions. Those skilled in the art should easily realize that some embodiments of the present disclosure may be implemented in a form of hardware or a combination of hardware and computer software combined with units and algorithmic steps of the various examples described in the embodiments disclosed herein. Whether a function is to be performed by hardware or by hardware driven by computer software depends on a specific application and design constraints of the technical solution. A Person skilled in the art may use different methods to implement the described functions for each particular application, but it is not to be considered that the implementation goes beyond the scope of the embodiments of the present disclosure.

In some embodiments of the present disclosure, the digital-currency cross-border transaction apparatus based on a blockchain or the electronic device may be exemplarily divided into functional modules based on the above method. For example, the functional modules may be divided based on their functions, or two or more functions may be integrated into a processing module. The above integrated module may be implemented in a form of hardware, or may be implemented in a form of software functional module. It should be noted that the division of modules in some embodiments of the present disclosure is schematic, which is only a logical function division, and the division may be in other forms in actual implementation.

As shown in FIG. 10, a digital-currency cross-border transaction apparatus based on a blockchain 30 is further provided according to some embodiments of the present disclosure, and the digital-currency cross-border transaction apparatus should be configured as a transaction initiation device in a blockchain payment system. The digital-currency cross-border transaction apparatus 30 includes: a generating unit 301, a processing unit 302, a sending unit 303, and a determining unit 304.

The generating unit 301 is configured to generate a digital-currency payment request which includes a payment account address, a beneficiary account address of a beneficiary bank, a payment amount, and currency-type information.

The processing unit 302 is configured to create a payment request block based on the digital-currency payment request, where the payment request block is obtained by signing based on a private key of the transaction initiation device, the blockchain is configured with a digital-currency smart contract including a payment function, the payment function is used for performing payment based on the payment request block, and the digital-currency smart contract is used for managing digital currency corresponding to the currency-type information.

The sending unit 303 is configured to send the payment request block to the blockchain.

The determining unit 304 is configured to determine, in response to a success result of the payment by the payment function for the payment request block, that the digital-currency payment request is completed.

In some embodiments, the generating unit 301 is further configured to generate a digital-currency exchange request which includes an exchange account address, an exchange amount, and exchange currency-type information.

The processing unit 302 is further configured to create an exchange request block based on the digital-currency payment request, for requesting to invoke at least one exchange smart contract configured in the blockchain by the digital-currency smart contract. The exchange request block is obtained by signing based on the private key of the transaction initiation device. The currency exchange smart contract is used for exchanging local currency for a foreign currency.

The sending unit 303 is further configured to send the exchange request block to the blockchain.

The determining unit 304 is further configured to determine, in response to a success result of exchanging by the exchange smart contract for the exchange request block, that the digital-currency exchange request is completed.

In some embodiments, the blockchain payment system further includes a transaction supervision device. As shown in FIG. 10, the digital-currency cross-border transaction apparatus 30 further includes: a receiving unit 305 configured to receive an instruction message sent by the transaction supervision device. The instruction message is used to instruct the transaction initiation device to create the payment request block based on the digital-currency payment request; and the instruction message is generated in a case that a compliance audit is passed, the compliance audit being performed by the transaction supervision device on the digital-currency payment request based on a predetermined compliance rule upon monitoring the digital-currency payment request.

In some embodiments, as shown in FIG. 10, the digital-currency cross-border transaction apparatus 30 further includes: an authenticating unit 306.

The authenticating unit 306 is configured to perform authentication on the digital-currency payment request based on a predetermined authentication rule. The processing unit 302 is further configured to create the payment request block based on the digital-currency payment request in a case that the authentication is passed.

In some embodiments, the payment smart contract and the at least one exchange smart contract are created by the transaction supervision device.

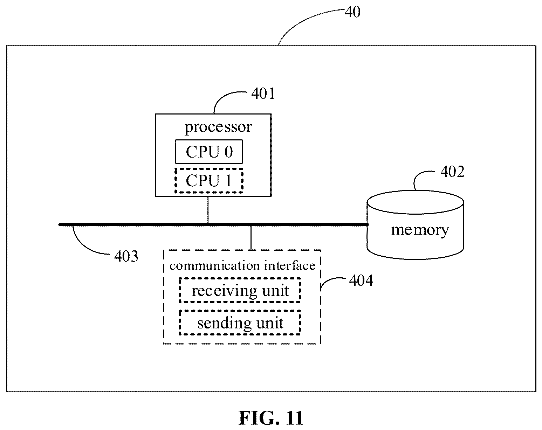

In a case that a functionality of the above integrated modules is implemented in a form of hardware, a possible schematic structural diagram of the transaction initiation device involved in the above embodiments is provided according to some embodiments of the present disclosure. As shown in FIG. 11, the transaction initiation device 40 includes a processor 401, a memory 402, and a bus 403. The processor 401 and the memory 402 may be connected to each other through the bus 403.

The processor 401 is a control center of a communication apparatus and may be a single processor or a general term for multiple processing elements. For example, the processor 401 may be a general-purpose central processing unit (CPU), or may be other general-purpose processors, and the like. The general-purpose processor may be a microprocessor or any conventional processor, and the like.

In an embodiment, the processor 401 may include one or more CPUs, such as CPU 0 and CPU 1 shown in FIG. 11.

The memory 402 may be a read-only memory (ROM) or other types of static storage devices that may store static information and instructions, a random access memory (RAM) or other types of dynamic storage devices that may store information and instructions, or may be an electrically erasable programmable read-only memory (EEPROM), a magnetic disk storage medium or other magnetic storage device, or any other medium that may carry or store expected program code in a form of instructions or data structures and may be accessed by a computer, which is not limited herein.

In an embodiment, the memory 402 may exist independently of the processor 401, the memory 402 and the processor 401 may be connected to each other through the bus 403 and the memory 402 is configured to store instructions or program code. A digital-currency cross-border transaction method based on a blockchain provided according to some embodiments of the present disclosure may be implemented in a case that the processor 401 invokes and executes the instructions or program code stored in the memory 402.

In another embodiment, the memory 402 may also be integrated with the processor 401.

The bus 403 may be an Industry Standard Architecture (ISA) bus, an External Component Interconnect (PCI) bus, an Extended Industry Standard Architecture (EISA) bus, and the like. The bus may include an address bus, a data bus, a control bus and the like. For ease of representation, the bus in Figure 11 is denoted by one bold line, which does not mean that there is only one bus or one type of bus.

It is noted that the structure shown in FIG. 11 does not constitute a limitation on the transaction initiation device 40. In addition to components shown in FIG. 11, the transaction initiation device 40 may include more components or fewer components than those shown in FIG. 11, or a combination of some components, or components deployed in different manners.

In some embodiments, the transaction initiation device 40 provided according to some embodiments of the present disclosure may also include a communication interface 404.

The communication interface 404 is configured to connect with other devices via a communication network. The communication network may be an Ethernet network, a wireless access network, wireless local area networks (WLAN), and the like. The communication interface 404 may include a receiving unit configured to receive data, and a sending unit configured to send data.

In some embodiments, in the transaction initiation device provided according to some embodiments of the present disclosure, a communication interface may also be integrated in a processor.

In another hardware structure of the transaction initiation device provided according to some embodiments of the present disclosure, an electronic device may include a processor and a communication interface. The processor is coupled to the communication interface.

For a function of the processor, reference may be made to the description of the above processor. In addition, the processor has a storage function, which may refer to a function of the above memory.

The communication interface is configured to provide data for the processor. The communication interface may be an internal interface of a communication apparatus or an external interface of the communication apparatus.

It is to be noted that above another hardware structure does not constitute a limitation on the transaction initiation device. In addition to above another hardware component, the transaction initiation device may include more components or fewer components, or a combination of some components, or components deployed in different manners.

In a case that a functionality of the above integrated modules is implemented in a form of hardware, in some embodiments of the present disclosure, a schematic structural diagram of a middleware involved in the above embodiments may refer to a schematic structural diagram of the above executive machine.

A computer-readable storage medium storing instructions is further provided according to some embodiments of the present disclosure. When the instructions are executed by a computer, the computer implements various steps in the flowcharts of the digital-currency cross-border transaction method based on a blockchain according to the above method embodiments.

A computer program product storing instructions is further provided according to some embodiments of the present disclosure. The instructions, when run on a computer, cause the computer to perform the digital-currency cross-border transaction method based on a blockchain according to the above method embodiments.

The computer-readable storage medium may be, but is not limited to, an electrical, magnetic, optical, electromagnetic, infrared, or semiconductor system, apparatus, or device, or any combination thereof. The computer-readable storage medium may include but is not limited to: a hard disk drive (HDD), a floppy disk drive, a flash memory, an optical disk, a magneto-optic disk, a tape, a universal serial bus (USB) drive, or a combination of two or more of the above. In an embodiment, the computer-readable storage medium may include a removable or non-removable (or fixed) medium, or the computer-readable storage medium is non-volatile solid-state memory. The computer-readable storage medium may be inside or outside the transaction initiation device. An exemplary storage medium is coupled to a processor, so that the processor may read information from the storage medium and may write information to the storage medium. Alternatively, a storage medium may be an integral part of a processor. The processor and the storage medium may be located in an application specific integrated circuit (ASIC). In the embodiments of the present disclosure, the computer-readable storage medium may be any tangible medium containing or storing a program, and the program may be used by or in combination with an instruction execution system, apparatus, or device.

Since the server, the transaction initiation device, the computer-readable storage medium, and the computer program product in embodiments of the present disclosure may be applied to the above method, the technical effects obtained thereby may also refer to the above method embodiments, which are not repeated herein.

The above are only specific implementations of the embodiments according to the present disclosure, but the protection scope of the present disclosure is not limited thereto. Any modifications and substitutions within the technical scope disclosed in the present disclosure shall fall within the protection scope of the present disclosure.

## Claims

1. A digital-currency cross-border transaction method based on a blockchain, applied to a transaction initiation device in a blockchain payment system, comprising:
generating a digital-currency payment request which comprises a payment account address, a beneficiary account address of a beneficiary bank, a payment amount, and currency-type information;
creating a payment request block based on the digital-currency payment request and sending the payment request block to the blockchain, wherein the payment request block is obtained by signing based on a private key of the transaction initiation device, the blockchain is configured with a digital-currency smart contract comprising a payment function, the payment function is used for performing payment based on the payment request block, and the digital-currency smart contract is used for managing digital currency corresponding to the currency-type information; and
determining, in response to a success result of the payment by the payment function for the payment request block, that the digital-currency payment request is completed.

2. The digital-currency cross-border transaction method according to claim 1, further comprising:
generating a digital-currency exchange request; wherein the digital-currency exchange request comprises an exchange account address, an exchange amount, and exchange currency-type information;
creating an exchange request block based on the digital-currency exchange request and sending the exchange request block to the blockchain, for requesting to invoke at least one exchange smart contract configured in the blockchain by the digital-currency smart contract, wherein the exchange request block is obtained by signing based on the private key of the transaction initiation device, and each exchange smart contract is used for exchanging a local currency for a foreign currency; and
determining, in response to a success result of exchanging by the exchange smart contract for the exchange request block, that the digital-currency exchange request is completed.

3. The digital-currency cross-border transaction method according to claim 2, wherein the blockchain payment system further comprises a transaction supervision device, and before the creating an payment request block based on the digital-currency payment request, the method further comprises:
receiving an instruction message sent by the transaction supervision device; wherein the instruction message is used to instruct the transaction initiation device to create the payment request block based on the digital-currency payment request; and the instruction message is generated in a case that a compliance audit is passed, the compliance audit being performed by the transaction supervision device on the digital-currency payment request based on a predetermined compliance rule upon monitoring the digital-currency payment request.

4. The digital-currency cross-border transaction method according to claim 3, wherein before the creating a payment request block based on the digital-currency payment request, the method further comprises:
performing authentication on the digital-currency payment request based on a predetermined authentication rule; and
creating the payment request block based on the digital-currency payment request in a case that the authentication is passed.

5. The digital-currency cross-border transaction method according to claim 3 or 4, a payment smart contract and the at least one exchange smart contract are created by the transaction supervision device.

6. The digital-currency cross-border transaction method according to claim 3 or 4, wherein before the creating a payment request block based on the digital-currency payment request, the method further comprises:
sending an institution join request to the transaction supervision device, wherein the institution join request comprises the payment account address and an institution identifier; and
joining, in response to a join completion message, the blockchain payment system.

7. The digital-currency cross-border transaction method according to any one of claims 1 to 6, further comprising:
generating a digital-currency issuance request, wherein the digital-currency issuance request comprises an issuance amount and an issuance account address;
creating an issuance request block based on the digital-currency issuance request and sending the issuance request block to the blockchain, for requesting to invoke an issuance smart contract configured in the blockchain by the digital-currency smart contract; wherein the issuance request block is obtained by signing based on the private key of the transaction initiation device, and the issuance smart contract is used for exchanging a local currency for a local digital currency; and
determining, in response to a success result of issuance by the issuance smart contract for the issuance request block, that the digital-currency issuance request is completed.

8. The digital-currency cross-border transaction method according to any one of claims 1 to 7, further comprising:
generating a digital-currency cancellation request; wherein the digital-currency issuance request comprises a cancellation amount and a cancellation account address;
creating a cancellation request block based on the digital-currency cancellation request and sending the cancellation request block to the blockchain, for requesting to invoke a cancellation smart contract configured in the blockchain by the digital-currency smart contract; wherein the cancellation request block is obtained by signing based on the private key of the transaction initiation device, and the cancellation smart contract is used for exchanging a local digital currency for a local currency; and
determining, in response to a success result of cancellation by the cancellation smart contract for the issuance request block, that the digital-currency cancellation request is completed.

9. The digital-currency cross-border transaction method according to any one of claims 1 to 8, further comprising:
generating a digital-currency transaction inquiry request; wherein the digital-currency payment request comprises the payment account address and a transaction time period;
sending the digital-currency transaction inquiry request to the blockchain; wherein the blockchain is configured with a transaction-record inquiry contract, and the transaction-record inquiry contract is used for inquiring a transaction record based on the digital-currency transaction inquiry request; and
acquiring a transaction-record inquiry result sent by the blockchain, to obtain a transaction record during the transaction time period.

10. The digital-currency cross-border transaction method according to any one of claims 1 to 9, wherein
the digital-currency smart contract configured in the blockchain comprises a limit function, and the limit function is used for performing a limit verification on the payment amount based on the payment request block.

11. The digital-currency cross-border transaction method according to any one of claims 1 to 10, wherein
the blockchain is configured with an institution status audition function, and the institution status audition function is used to detect whether a payment account address is frozen.

12. The digital-currency cross-border transaction method according to any one of claims 1 to 11, wherein
a consensus algorithm configured in the blockchain is a HotStuff-like consensus algorithm.

13. A digital-currency cross-border transaction apparatus based on a blockchain, wherein the apparatus is applied to a transaction initiation device in a blockchain payment system, and the apparatus comprises: a generating unit, a processing unit, a sending unit, and a determining unit;
wherein the generating unit is configured to generate a digital-currency payment request which comprises a payment account address, a beneficiary account address of a beneficiary bank, a payment amount, and currency-type information;
the processing unit is configured to create a payment request block based on the digital-currency payment request, wherein the payment request block is obtained by signing based on a private key of the transaction initiation device, the blockchain is configured with a digital-currency smart contract comprising a payment function, the payment function is used for performing payment based on the payment request block, and the digital-currency smart contract is used for managing digital currency corresponding to the currency-type information;
the sending unit is configured to send the payment request block to a blockchain; and
the determining unit is configured to determine, in response to a success result of the payment by the payment function for the payment request block, that the digital-currency payment request is completed.

14. A transaction initiation device, comprising: a processor and a communication interface, wherein the communication interface is coupled to the processor to cause the processor to execute a computer program or an instruction, to implement the digital-currency cross-border transaction method according to any one of claims 1 to 12.

15. A computer-readable storage medium, wherein a computer-executable instruction stored in the computer-readable storage medium, when executed by a processor of an electronic device, causes the electronic device to perform the digital-currency cross-border transaction method according to any one of claims 1 to 12.
